Europäisches Patentamt

European Patent Office

Office européen des brevets

(19)

(11) Veröffentlichungsnummer: **0 183 010 B1**

# EUROPÄISCHE PATENTSCHRIFT

(12)

(45) Veröffentlichungstag der Patentschrift: **08.01.92**

(21) Anmeldenummer: **85112371.1**

(22) Anmeldetag: **30.09.85**

(51) Int. Cl.⁵: **B23B 31/32**, B23B 31/02, B23B 31/00

(54) **Vorrichtung zur Aufnahme von Werkstücken während der spanabhebenden Bearbeitung.**

(30) Priorität: **29.11.84 DE 3443487**

(43) Veröffentlichungstag der Anmeldung:
**04.06.86 Patentblatt 86/23**

(45) Bekanntmachung des Hinweises auf die
Patenterteilung:
**08.01.92 Patentblatt 92/02**

(84) Benannte Vertragsstaaten:
**CH DE IT LI SE**

(56) Entgegenhaltungen:
EP-A- 0 151 709      FR-A- 2 358 944
GB-A- 790 880        US-A- 1 882 871
US-A- 1 882 997      US-A- 2 553 178
US-A- 3 455 567

PATENT ABSTRACTS OF JAPAN, Band 6, Nr.
69 (M-125)[947] 30. April 1982; & JP-A-57 00
8005 (FUJITSU FANUC K.K.) 16-01-1982

(73) Patentinhaber: **Buderus Schleiftechnik GmbH
Am Bahnhof Postfach 11 56
W-6332 Ehringshausen(DE)**

(72) Erfinder: **Schreiber, Jürgen
Karl Kellner-Ring 35
W-6330 Wetzlar(DE)**
Erfinder: **Guntram, Albrecht
Lauerstrasse 10
W-6330 Wetzlar(DE)**

EP 0 183 010 B1

## Beschreibung

Die Erfindung betrifft eine Vorrichtung zur Aufnahme von Werkstücken mit verzahnungsähnlicher Oberfläche, um diese während der spanabhebenden Bearbeitung mittels der Spannbacken eines Spannfutters zu halten.

Es ist üblich Zahnräder oder dgl. Werkstücke in ein Spannfutter unter Zwischenschaltung eines Rollenkäfigs einzuspannen. Dieser Rollenkäfig besteht aus einem Metallring mit aufgefädelten Rollen auf federnden Drähten, wobei die einzelnen Rollenreihen den Zahnlücken der Zahnräder angepaßt sind. Ein solcher Rollenkäfig wird zunächst in die Zahnlücken des Zahnrades eingeschoben und dann mit diesem in das Spannfutter eingesetzt. Das Spannfutter greift so an den Rollen an, und eine Beschädigung der Zahnräder durch die Spannvorrichtung wird vermieden.

Bei jedem Werkstückwechsel muß in einem besonderen Arbeitsgang jeweils der Rollenkäfig über das Werkstück geschoben und nach dessen Bearbeitung auch wieder abgezogen und gereinigt werden, um für das nachfolgende Werkstück erneut zur Verfügung zu stehen. Die für einen Werkstückwechsel benötigte Zeit ist hierbei relativ lang und außerdem ist die Automatisierung des Werkstückwechsels kaum möglich.

In der GB-A - 790 880 wird ein im Bereich der Spannbacken des Spannfutters eingesetzter Haltering beschrieben, welcher mit einer Anzahl sich in die Zahnlücken des Werkstückes einsetzenden Rollen versehen ist. Die Rollen werden über den Umfang des Halteringes von drei Klemmsegmenten umschlossen, aufwelche die Spannbacken des Spannfutters einwirken. Der Werkstückwechsel erfolgt über eine automatische Beschickungsvorrichtung. Der Haltering hat an seiner Stirnfläche einen radial nach innen vorstehenden Zahn, welcher sich in Einführungsrichtung nach hinten verbreitert. Er soll als Einführungshilfe dienen, damit die Zahnteilung des Werkstückes mit der Anordnung der Rollen des Halteringes beim Einführen übereinstimmt. Die Ausbildung dieser Einführungshilfe ist aber nicht optimal, denn bei den heute geforderten kurzen Taktzeiten muß die Einführung garantiert ohne jede Behinderung in schneller Folge gewährleistet sein.

Der Erfindung liegt die Aufgabe zugrunde, einen automatischen schnellen Werkstückwechsel zu ermöglichen, dabei aber gleichzeitig die Bearbeitungsgenauigkeit zu erhöhen. Diese Aufgabe wird mit einer Vorrichtung gelöst, welche die im Patentanspruch 1 angegebenen Merkmale aufweist.

Die über die Stirnfläche des Halterings vorstehende, mit einer dachähnlichen Oberseite und einer den Zahnlücken angepaßter radialer Spitze versehene Einführungshilfe ermöglicht ein sicheres automatisches Einsetzen des Werkstückes.

Beim Einschieben des Werkstückes kommt infolge einer vorgesehenen Relativbewegung zwischen Werkstück und Spannvorrichtung dieses zunächst mit der vorstehenden Kante der dachähnlichen Oberfläche in Kontakt. Anschließend gleitet an den Schrägflächen der Einführungshilfe das Werkstück in genaue Übereinstimmung mit der Anordnung der Rollen des Halteringes.

Beim Verschleiß der Einführungshilfen können diese durch neue ersetzt werden. Um die Bearbeitungsgenauigkeit zu erhöhen, wird beim Wechseln der Werkstücke der fest mit dem Spannfutter verbundene Haltering in an sich bekannter Weise gereinigt

In der Zeichnung ist ein Ausführungsbeispiel an einem Zahnrad dargestellt, dessen Bohrung innenrund geschliffen werden soll.

Es Zeigen:

Fig. 1 eine Vorderansicht des in ein Membranfutter eingesetzten Halteringe mit teilweiser Schnittdarstellung.

Fig. 2 einen Längsschnitt durch das Spannfutter im Bereich der Spannbacken gemäß II-II.

Fig. 3 einen Längsschnitt durch das Spannfutter im Bereich der Leitung für das Reinigungsmedium.

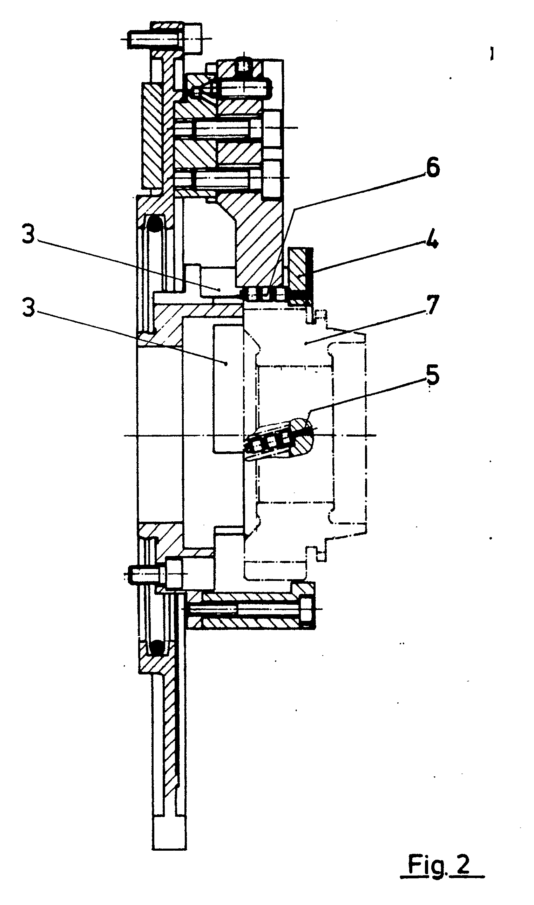

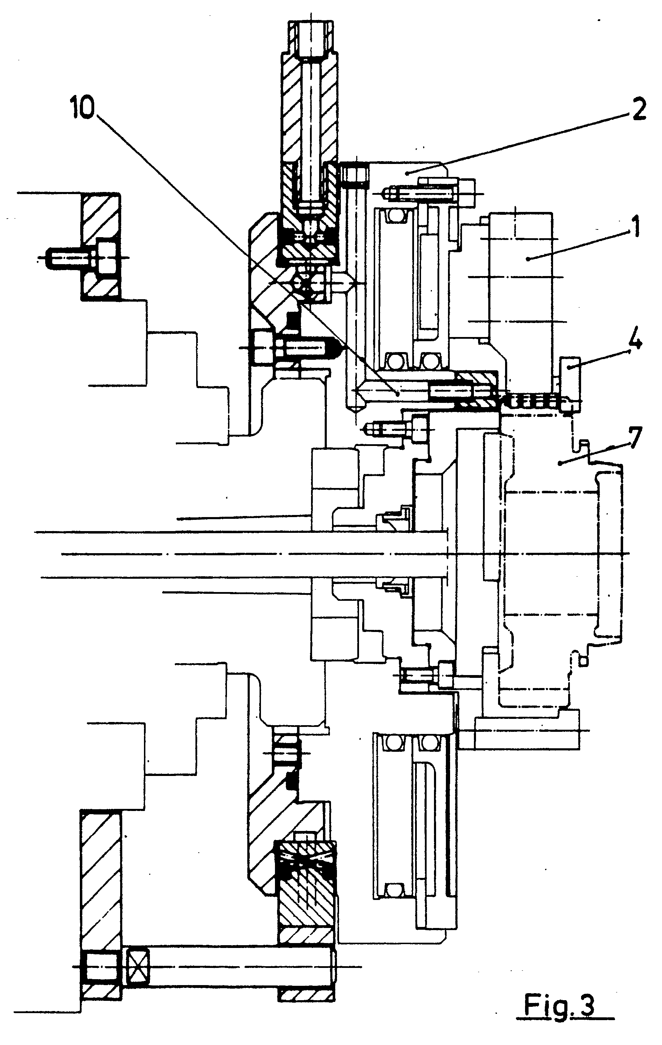

Die Spannbacken 1 des Membranspannfutters 2 greifen in entsprechende Fensteröffnungen 3 des in das Spannfutter eingesetzten Halteringes 4. Im Bereich dieser Fensteröffnungen sind am Haltering 4 auf federnden Drahtstücken 5, Rollen 6 nach Art eines Rollenkäfigsegmentes befestigt. Die Anordnung der Rollen ist dabei so getroffen, daß diese in die Zahnlücken eines zu erfassenden Werkstückes passen. Ein Zahnrad 7 ist in Fig. 2 und 3 strichpunktiert als zu bearbeitendes Werkstück angedeutet. Die Spannbacken 1 greifen an den Rollen 6 beim Einspannen an und drücken diese ihrerseits fest an das Zahnrad. Auf diese Weise erfolgt ein genaues und sicheres Einspannen des Werkstückes.

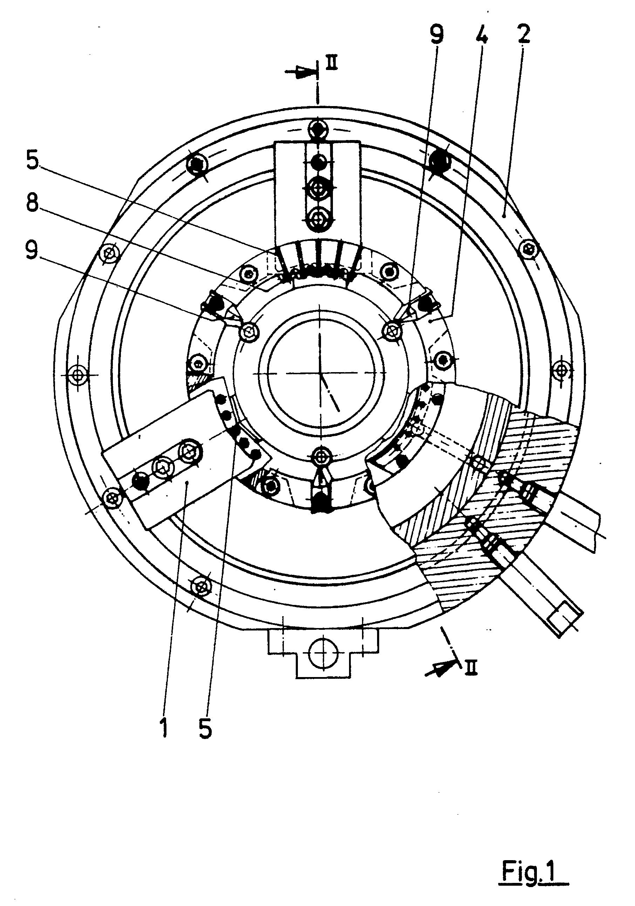

Aus Fig. 1 ist zu entnehmen, daß der Haltering 4 im Einspannbereich der Spannbacken 1 bzw. der Rollenkäfigsegmente eine zur Drehachse des Spannfutters hin gerichtete Zahnprofilierung 8 aufweist, welche dem zu bearbeitenden Werkstück angepaßt ist. Um eine sichere Beladung des Werkstückes in das Spannfutter zu bewirken, ohne daß Beschädigungen des Halteringes 4 auftreten, sind auf der Stirnfläche des Halteringes 4 Einführungshilfen 9 vorgesehen. Sie bestehen aus vorstehenden und verstellbaren Vorfühlstiften, deren Spitze der Form der Zahnlücken des einzusetzenden Werkstückes entspricht. Ihre Oberseite ist im Bereich der Spitze dachähnlich ausgebildet.

Um die bei der spanabhebenden Bearbeitung des Werkstückes entstehende Verschmutzung der Rollen 6 zu beseitigen, führt durch das Spannfutter 1 bis in den Bereich der Rollenkäfigsegmente eine mit einem Reinigungsmedium beaufschlagte Leitung 10, über welche bei jedem Be- und Entladevorgang auf die Rollen ein Reinigungsmedium (Flüssigkeit oder Luft) gespritzt oder geblasen wird. Die Betätigung eines entsprechenden Ventils kann automatisch abhängig Von der Steuerung des Spannfutters erfolgen.

Ein Arbeitszyklus ist folgender:
Für eine bestimmte Werkstückserie wird der entsprechend ausgebildete Haltering 4 zwischen die Spannbacken 1 des Spannfutters 2 eingesetzt. Das Werkstück, z.B. Zahnrad 7, dessen Innenbohrung rundgeschliffen werden soll, wird in den Haltering 4 eingesetzt. Die an der Stirnfläche des Halteringes 4 angebrachten Vorfühlstifte 9 sorgen infolge der Relativbewegung zwischen Werkstück und Spannvorrichtung dafür, daß die Zahnteilung in genaue Übereinstimmung mit der Anordnung der Rollenkäfigsegmente des Halteringes 4 gebracht wird. Beim Einschieben des Werkstückes in den Haltering wird so vermieden, daß Beschädigungen am Haltering auftreten können. Außerdem wird die notwendige Taktzeit für das Beladen auf ein Mindestmaß reduziert. Die Spannbacken 1 des Spannfutters werden nun auf "Spannen" betätigt, und halten so unter Zwischenlage der Rollen 6 das Werkstück zentriert fest. Nachdem die vorgesehenen Flächen des Werkstückes wunschgemäß bearbeitet worden sind (z.B. innen oder außen rundgeschliffen) werden die Spannbacken entspannt, das Werkstück kann entnommen und durch das nächste Werkstück ersetzt werden. Während des Werkstückwechsels werden die Rollen 6 mit einem Reinigungsmedium besprüht, damit keine Abweichungen durch evtl. Verschmutzung auftreten können.

Die Vorteile des in das Spannfutter einsetzbaren Halteringes liegen auf der Hand.

1) Es entfällt das früher übliche zeitraubende Aufschieben eines Rollenkäfigs von Hand über das zu bearbeitende Werkstück, bevor dieses in das Spannfutter eingesetzt wird. Dadurch kann die Taktzeit wesentlich herabgesetzt werden.
2) Es ist möglich das Spannfutter automatisch mit Werkstücken zu beschicken.
3) Die Bearbeitungstoleranzen zwischen den einzelnen Werkstücken werden auf ein Minimum reduziert.
4) Es wird nur noch 1 Rollenkäfig für den schnellen Werkstückwechsel benötigt.

## Patentansprüche

1. Vorrichtung zur Aufnahme von Werkstücken mit verzahnungsähnlicher Oberfläche, insbesondere von Zahnrädern, während des spanabhebenden Innen- und/oder Außenrundschleifens, wobei das Werkstück von den Spannbacken eines Spannfutters unter Zwischenschaltung eines in das Spannfutter einsetzbaren und das Werkstück aufnehmenden Halteringes gelagert wird, welcher mindestens im Bereich der Spannbacken mit Fensteröffnungen, und sich in die Zahnlücken des Werkstückes einsetzenden Rollen versehen ist sowie an der Stirnfläche im Bereich der Rollen eine der Zahnteilung des zu bearbeitenden Werkstückes angepaßte Profilierung als Einführungshilfe aufweist, dadurch gekennzeichnet, daß

   a) als Einführungshilfe auf der Stirnfläche des Halterings (4) auswechselbare und über die Stirnfläche vorstehende Vorfühlerstifte (9) vorgesehen sind, deren Spitze der Form der Zahnlücken entspricht und an ihrer Oberseite dachähnlich ausgebildet ist,

   b) zwischen Werkstück und Spannvorrichtung während des Beladevorganges eine Relativbewegung stattfindet,

   c) im Bereich der die Spannbacken (1) des Spannfutters aufnehmende Fensteröffnungen (3) des Halterings (4) eine Rollenlagerung nach Art von Rollenkäfigsegmenten vorgesehen ist, und

   d) im Bereich der Rollenkäfigsegmente Austrittsöffnungen einer mit einem Reinigungsmedium beaufschlagten Leitung (10) angeordnet sind, durch welche während jedes Be- und Entladevorganges Reinigungsmedium auf die Rollen (6) der Rollenkäfigsegmente gebracht wird.

2. Vorrichtung nach Anspruch 1, dadurch gekennzeichnet, daß die Leitungen für das Reinigungsmedium durch die Spannbacken des Spannfutters geführt sind, und die Austrittsöffnungen für das Reinigungsmedium auf die Rollen der Rollenkäfigsegmente gerichtet sind.

## Claims

1. A device for receiving workpieces with toothing-like surfaces, in particular gear wheels, during a metal-removing internal and/or external cylindrical grinding process, wherein the workpiece is supported by the clamps of a chuck under interposition of a holding ring to be inserted into the chuck and receiving the workpiece, said holding ring being provided, at least in the area of the clamps, with window openings and with rollers engaging into the gaps of tooth of the workpiece, and comprising, as an introduction aid, at the front face in the area of the rollers, a profiling adapted to the tooth pitch of the workpiece to be processed,

characterised by that

a) pre-tracers (9) being replaceable and extending beyond the front face of the holding ring (4) are provided as an introduction aid on the front face, the tips of said pre-tracers corresponding to the shape of the gaps of tooth and being adapted roof-type on their top,
b) between the workpiece and the clamping device, there is a relative movement during loading,
c) in the area of the window openings (3) of the holding ring (4) receiving the clamps (1) of the chuck, a roller bearing in the form of roller cage segments are provided, and
d) in the area of the roller cage segments, exit openings of a line (10) supplied with a cleaning agent are provided, through which, during each loading and unloading process, cleaning agent is applied onto the rollers (6) of the roller cage segments.

2. A device according to claim 1,
characterised by that the lines for the cleaning agent are conducted through the clamps of the chuck, and that the exit openings for the cleaning agent are directed toward the rollers of the roller cage segments.

**Revendications**

1. Dispositif pour le logement de pièces à usiner ayant une surface de type denté, en particulier de roues dentées, pendant la rectification cylindrique intérieure et/ou extérieure, la pièce à usiner étant logée par les mâchoires de serrage d'un mandrin par l'intermédiaire d'un anneau de support à insérer dans le mandrin et recevant la pièce à usiner, ledit anneau de support étant pourvu, au moins dans la région des mâchoires de serrage, d'ouvertures de fenêtre et de rouleaux s engrenant dans les entredents de la pièce à usiner et, à la face frontale dans la région des rouleaux, d'un profilage adapté au pas de dents de la pièce à usiner comme aide d'introduction,

caractérisé en ce que

a) des pré-palpeurs (9) interchangeables sont prévus comme aide d'introduction sur la face frontale de l'anneau de support (4), lesdits pré-palpeurs s'étendant au-delà de la face frontale et les pointes de ceux-ci ayant une forme selon les entredents et ressemblant au côté supérieur à un toit,
b) un mouvement relatif a lieu entre la pièce à usiner et le dispositif de serrage pendant le chargement,
c) une assise de rouleau sous la forme de segments de cage de rouleau est prévue dans la région des ouvertures de fenêtre (3) de l'anneau de support (4) recevant les mâchoires de serrage (1) du mandrin, et
d) des ouvertures de sortie d'une ligne (10) chargée d'un agent de nettoyage sont disposées dans la région des segments de cage de rouleau, à travers desquelles l'agent de nettoyage est transporté sur les rouleaux (6) des segments de cage de rouleau pendant chaque procédé de chargement et de déchargement.

2. Dispositif selon la revendication 1,
caractérisé en ce que les lignes pour l'agent de nettoyage sont guidées à travers des mâchoires de serrage du mandrin, et que les ouvertures de sortie pour l'agent de nettoyage sont dirigées vers les rouleaux des segments de cage de rouleau.

**Fig.1**

**Fig. 2**

**Fig.3**